# EUROPEAN PATENT APPLICATION

(11) **EP 1 324 622 A1**
(43) Date of publication of application: **02.07.2003**
(21) Application number: 01965553.9
(22) Date of filing: 10.08.2001
(51) Int. Cl.: H04N 17/00

(54) **BROADCAST CONFIRMATION SYSTEM, BROADCAST CONFIRMATION DEVICE AND METHOD, RECORDED MEDIUM WHERE BROADCAST CONFIRMATION PROGRAM IS RECORDED**

(30) Priority: 10.08.2000 JP 2000243316
(71) Applicant: NEC Corporation, Minato-ku, Tokyo 108-8001 (JP)
(72) Inventor: KASUTANI, Eiji, Minato-ku, Tokyo 108-8001 (JP); YAMADA, Akio, Minato-ku, Tokyo 108-8001 (JP); IWADARE, Masahiro, Minato-ku, Tokyo 108-8001 (JP)
(74) Representative: Jacoby, Georg
(86) International application number: JP0106931
(87) International publication number: WO02015596

(57) **Abstract**

A CM feature data extracting unit 22 extracts a feature data 24 of a section corresponding to a CM from broadcasting signals received by a receiving facility 21. A checking portion 23 checks the feature data 24 against a CM feature data registered with a DB 3. The checking portion 23 registers, with the DB 3, the CM feature data 24 determined not being included in the DB 3 as a new CM. The feature data calculating portion 42 extracts a feature data 44 from broadcast waves received by a receiving facility 41. A checking unit 43 checks the feature data 44 against a CM feature datatored with the DB 3. When they agree, a checking portion 4 sends out a checking result 45 to a recording portion 5. The recording portion 5 creates a report 51 from the checking result 45 and submits the report 51 to a client 1. A broadcast checker 6 receives a broadcast checking charge 11 in compensation for the report 51.

## Description

### Technical Field

The present invention relates to a broadcast checking system for monitoring cable and radio broadcast waves for radios, televisions and so on.

### Background Art

In a commercial (sometimes called "CM" hereinafter) broadcast, a broadcast station makes a contract with a client such as an advertiser and an advertisement agency. Then, audio data and/or video data provided from the client are broadcasted by the broadcast station between programs. A time for broadcasting a commercial is roughly determined. However, the program schedule itself may be changed in many cases because of emergency news or the program itself. Therefore, the time for broadcasting a commercial is not determined strictly.

Importantly, a client needs to realize whether or not a desired number of commercials commissioned for broadcasting has been broadcasted at intended times. In the present system, a broadcast station submits a broadcast proof to a client at the end of the month in order to prove that a predetermined commercial is broadcasted as determined in the contract.

However, the contents of the broadcast proof are reported by the broadcast station and are not verified by a third party. This kind of system is supported by the business practice. Therefore, a fraud may be committed, such as submitting a broadcast proof against a fact that a broadcast against the contract has been performed. However, the client cannot check the fraud easily. In fact, this kind of fraud has been reported.

Conventionally, in order to check whether or not a broadcast as in the contract has been performed, the broadcast is checked by human eyes generally. However, this method costs high disadvantageously. As the numbers of channels and/or commercials to check are increased, the increased number of people are required for the checking. Furthermore, the precision of the checking depends on the physical condition of the person checking by using his/her eyes disadvantageously. Advertisers need to research not only their commercials but also records of commercial broadcasts by rival companies and/or different industries for the marketing purpose. However, the above-described method still costs high.

The same is true in distributions of television pictures other than commercials. Presently, for example, news pictures having logos of source broadcast stations are often distributed to other broadcast stations in foreign countries as they are. However, like the case of commercials, an organized system is not provided to source broadcast stations for recognizing when, where and how many times a given picture has been broadcasted. Therefore, the source broadcast stations have to believe reports submitted by other broadcast stations having received the distribution of news pictures. Alternatively, like the case of commercials, checking by human eyes is the only measure disadvantageously.

Accordingly, a broadcast checking technology as disclosed in Japanese Unexamined Patent Publication (JP-A) No. 7-79206, for example, has been proposed as a system for broadcast checking. By using this technology, received voice of a television broadcast is muted, and pictures are changed significantly. Thus, the beginning or end of CM may be identified, and the voice signals between them are extracted and are compared with voice signals stored in advance. As a result, the broadcasted CM is identified automatically.

However, the broadcast checking only by using voice checking has following problems. In other words, many CM versions of a certain kind of drink or soft drink exist. These CM versions have the totally same voice and only different images. In this case, broadcast checking by using voice recognition cannot identify the difference in version. Therefore, a fact that an old CM version has been broadcasted instead of the new CM version cannot be identified.

According to a system disclosed in Japanese Unexamined Patent Publication (JP-A) No. 56-8938, whether an identification number inserted to CM broadcasting is detected at contracted time zones, number of times and times and dates or not is checked in order to check whether or not the CM has been broadcasted as contracted with the sponsor. However, such an identification number is determined by each broadcast station. Therefore, CM broadcasting by other companies cannot be checked disadvantageously.

The present invention was made in view of the above-described problems. It is an object of the invention to provide a broadcast checking system, which can allow a third party independent from a broadcast station and a client to check broadcasting of contents such as commercials and news pictures non-manually and inexpensively in order to report to the client. It is another object of the present invention to provide a broadcast checking apparatus and broadcast checking method to be applied to the broadcast checking system and a recording medium storing a computer program for implementing them.

### Disclosure of Invention

In order to solve the above-described problems, the invention according to Claim 1 is A broadcast checking apparatus for checking broadcasting of contents including pictures, the apparatus including a storing unit for storing feature data of the contents, a contents feature data extracting unit for extracting a feature data of the contents from broadcasting signals, a contents registering unit for registering the feature data of the contents extracted by the contents feature data extracting unit with the storing unit, a first feature data calculating unit for calculating a feature data from broadcasting signals, a checking unit for checking the feature data calculated by the first feature data calculating unit against the feature data on the storing unit, and a recording unit for recording a checking result obtained by the checking.

The invention according to Claim 2 is a broadcast checking apparatus for checking broadcasting of contents including pictures, the apparatus including a storing unit for storing feature data of the contents, a contents feature data extracting unit for extracting a feature data of the contents from broadcasting signals, a registration checking unit for checking the feature data of the contents extracted by the contents feature data extracting unit against the feature data on the storing unit, a contents registering unit for registering the feature data of the contents determined as not being included in the storing unit as a result of the checking by the registration checking unit with the storing unit, a first feature data calculating unit for calculating a feature data from broadcasting signals, a checking unit for checking the feature data calculated by the first feature data calculating unit against the feature data on the storing unit, and a recording unit for recording a checking result obtained by the checking.

The invention according to Claim 3 is a broadcast checking apparatus for checking broadcasting of contents including pictures, the apparatus including a storing unit for storing feature data of the contents, a contents feature data extracting unit for extracting a feature data of the contents from broadcasting signals, a checking unit for checking the feature data of the contents extracted by the contents feature data extracting unit against the feature data on the storing unit, a contents registering unit for registering the feature data of the contents determined as not being included in the storing unit as a result of the checking by the checking unit with the storing unit, and a recording unit for recording a checking result obtained by the checking.

The invention according to Claim 4 is a broadcast checking apparatus according to any one of Claims 1 to 3, wherein the contents feature data extracting unit includes a contents extracting unit for extracting the contents from broadcasting signals, and a second feature data calculating unit for calculating the feature data of the contents extracted by the contents extracting unit.

The invention according to Claim 5 is a broadcast checking apparatus according to any one of Claims 1 to 3, wherein the contents feature data extracting unit includes a second feature data calculating unit for calculating a feature data from broadcasting signals, and a contents feature data cutting-out unit for estimating a contents section from a feature data calculated by the second feature data calculating unit and for cutting out a feature data corresponding to the contents section.

The invention according to Claim 6 is a broadcast checking apparatus for checking broadcasting of contents including pictures, the apparatus including a storing unit for storing feature data of the contents, a first feature data calculating unit for calculating a feature data from broadcasting signals, a checking unit for checking the feature data calculated by the first feature data calculating unit against the feature data on the storing unit, a recording unit for recording a checking result obtained by the checking unit, a contents determining unit for determining whether or not the feature data determined as not being included in the storing unit as a result of the checking by the checking unit is the feature data of the contents, and a contents registering unit for registering the feature data determined as the feature data of the contents by the contents determining unit.

The invention according to Claim 7 is a broadcast checking unit according to Claim 6 wherein the contents determining unit performs the determination based on a checking result by the checking unit.

The invention according to Claim 8 is a broadcast checking apparatus according to any one of Claims 1 to 7, wherein the feature data calculating unit creates the feature data by creating a resized image of all or parts of frames included in picture data of contents and by performing frequency conversion and quantization on the resized image.

The invention according to Claim 9 is a broadcast checking apparatus according to any one of Claims 1 to 8, wherein the feature data calculating unit calculates the feature data of all received frames.

The invention according to Claim 10 is a broadcast checking apparatus according to any one of Claims 1 to 8, wherein the feature data calculating unit calculates the feature data of parts of received frames.

The invention according to Claim 11 is a broadcast checking apparatus according to any one of Claims 1 to 10, further including a time information creating unit for creating time information when a checking result of the checking unit agrees with a feature data on the storing unit, a time information adding unit for adding the time information to contents of the feature data agreeing with the feature data on the storing unit, and a recording unit for recording contents including the time information.

The invention according to Claim 12 is a broadcast checking unit according to any one of Claims 1 to 11, wherein the feature data calculating unit detects voice data included in the contents, wherein the storing unit stores voice data included in the contents, and wherein the checking unit checks the detected voice data against the stored voice data and outputs a checking result.

The invention according to Claim 13 is a broadcast checking system for checking broadcasting of contents that a client desires broadcast checking, the system including a broadcast checking apparatus according to any one of Claims 1 to 12, and a reporting unit for reporting a checking result recorded by the broadcast checking apparatus to the client.

The invention according to Claim 14 is a broadcast checking system according to Claim 13, wherein the reporting unit sends data indicating the checking result to the client.

The invention according to Claim 15 is a broadcast checking system according to Claim 13, wherein the reporting unit searches and reports a result of checking contents desired by the client from checking results recorded by the broadcast checking apparatus.

The invention according to Claim 16 is a broadcast checking method for checking broadcasting of contents including pictures, the broadcast checking method including the steps of extracting a feature data of the contents from broadcasting signals, storing the extracted contents feature data, calculating a feature data from broadcasting signals, checking the calculated feature data against the stored feature data, and recording a checking result obtained by the checking.

The invention according to Claim 17 is a broadcast checking method for checking broadcasting of contents including pictures, the broadcast checking method including the steps of storing a feature data of the content, extracting a feature data of the contents from broadcasting signals, checking the extracted feature data against the stored feature data, newly storing the extracted feature data determined as not being included in the stored feature data as a result of the checking, calculating a feature data from broadcasting signals, checking the calculated feature data against the stored feature data, and recording a checking result obtained by the checking.

The invention according to Claim 18 is a broadcast checking method for checking broadcasting of contents including pictures, the broadcast checking method including the steps of storing a feature data of the content, extracting a feature data of the contents from broadcasting signals, checking the extracted contents feature data against the stored feature data, newly storing the extracted feature data determined as not being included in the stored feature data as a result of the checking, and recording a checking result obtained by the checking.

The invention according to Claim 19 is a broadcast checking method for checking broadcasting of contents including pictures, the broadcast checking method including the steps of storing a feature data of the content, calculating a feature data from broadcasting signals, checking the calculated feature data against the stored feature data, recording a checking result obtained by the checking, determining whether or not the calculated feature data determined as not being included in the stored feature data as a result of the checking is the feature data of the contents, and newly storing the calculated feature data determined as not being included in the feature data of the contents as a result of the determining.

The invention according to Claim 20 is a computer-readable recording medium storing a broadcast checking program for checking broadcasting of contents including pictures. In this case, a broadcast checking method according to any one of Claims 16 to 19 is implemented.

### Brief Description of the Drawings

Fig. 1 is a block diagram showing a construction of a broadcast checking system according to a first embodiment of the present invention;
Fig. 2 is a flowchart showing steps performed when a CM checking portion 4 extracts and checks one image according to the first embodiment;
Fig. 3 is a flowchart showing steps performed when a CM checking portion 4 extracts and checks one image according to the first embodiment;
Fig. 4 is a block diagram showing a construction of a broadcast checking system according to a second embodiment of the present invention;
Fig. 5 is a block diagram showing a construction of a broadcast checking system according to a third embodiment of the present invention; and
Fig. 6 is a block diagram showing a construction of a broadcast checking system according to a fourth embodiment of the present invention.

### Best Mode for Carrying Out the Invention

Embodiments of the present invention will be described below sequentially with reference to drawings.

### [First Embodiment]

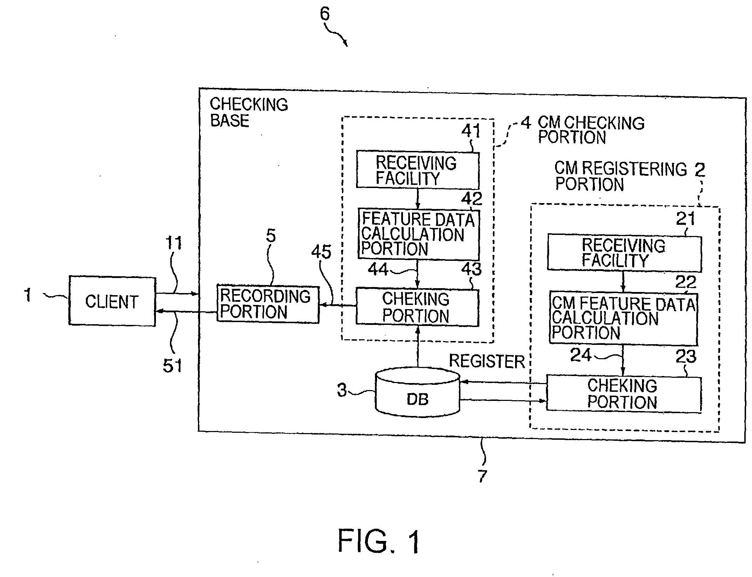

Fig. 1 is a block diagram showing a construction of a broadcast checking system according to a first embodiment of the present invention. In Fig. 1, a broadcast checker 6 reports a broadcast checking report (called report hereinafter) 51 for a CM requested by a client 1. The broadcast checker 6 holds a checking base 7. The checking base 7 includes a CM registering portion 2, a CM database (called DB hereinafter) 3, a CM checking portion 4 and a recording portion 5.

The CM registering portion 2 includes a receiving facility 21 for receiving broadcasting, a CM feature data extracting portion 22 and a checking portion 23. The receiving facility 21 includes an antenna and a tuner. In the CM registering portion 2, the CM feature data extracting portion 22 extracts a feature data 24 in a period corresponding to a given CM from broadcasting signals received by the receiving facility 21. The checking portion 23 checks the obtained feature data 24 against the feature data of the CM, which is registered in the DB 3. As a result of the checking, if the checking amount 24 of the CM is determined as not being included in the DB 3, the checking amount 24 is registered in the DB 3 as a new CM feature data.

The above-described broadcasting may be either television broadcasting or radio broadcasting. Furthermore, the broadcasting may be radio or cable. However, like the conventional broadcast checking system, voice checking in CM broadcast checking in television broadcasting is not enough for CM identification. Therefore, this embodiment is advantageous to apply to television broadcasting.

The checking portion 23 may register, with the DB 3, a part or all of the CM feature data 24 extracted by the CM feature data extracting portion 22.

The DB 3 includes an ID (Identifier) for identifying each CM, a title by which contents of a given CM is identified at a glance, and a CM feature data. The contents are a CM, here. In this case, a serial ID is issued uniquely for each CM to be registered in the DB 3. The title is an individual product name to be broadcasted in a CM. Furthermore, a feature data is information of 16 bytes for one second, 160 bytes for ten seconds, and 480 bytes for thirty seconds substantially. DB 3 includes many of these kinds of information.

Here, a method for extracting a feature data in a period corresponding to a given CM from received broadcasting signals will be described in detail. The CM feature data extracting portion 22 includes a CM extracting portion 221 (not shown) and a feature data calculating portion 222 (not shown). The CM extracting portion 221 extracts a period corresponding to a given CM from input broadcasting signals. This method has been known widely and conventionally. Received voice of television broadcasting is muted. Thus, the beginning or end of a CM is determined, and the signals are extracted. Next, the feature data calculating portion 222 calculates the feature data 24 from the CM extracted by the CM extracting portion 221.

Furthermore, another method for extracting a feature data of a period corresponding to a given CM from received broadcasting signals will be described in detail. This method is different from the above-described method. In this case, the CM feature data extracting portion 22 includes a feature data calculating portion 223 (not shown) and a CM-feature data cutting-out portion 224 (not shown). The feature data calculating portion 223 calculates a feature data from input broadcasting signals. Next, the CM-feature data cutting-out portion 224 estimates a CM period from a feature data calculated by the feature data calculating portion 223. Then, the CM-feature data cutting-out portion 224 cuts out the feature data 24 corresponding to the CM period.

Here, a method for calculating a feature data will be described in detail. In order to calculate a feature data, a method disclosed in Japanese Unexamined Patent Publication (JP-A) No. 11-059432 ("IMAGE FEATURE DATA CREATING APPARATUS, IMAGE SEARCHING APPARATUS, CREATING METHOD AND SEARCHING METHOD", which will be called "related technology" hereinafter) filed by the applicant of the present invention previously may be used. However, describing the detail of the technology disclosed in this related technology is complicated. Therefore, the technology will be described briefly with reference to a specific example.

After a given image is divided into 8 × 8 = 64 blocks, an average value of each of the images is calculated. Then, a thumbnail image (that is, an image in thumbnail size like an icon) of 8 pixels × 8 pixels is created. The thumbnail image appears just like a blurred CM image through a low-pass filter (LPF). In this case, a CM image is a general color image including three RGB primary colors. Therefore, 8 pixels × 8 pixels thumbnail image is created for each color. A CM image is actually television signals. Therefore, the created three images correspond to three kinds of signals of Y (luminance signals), R-Y and B-Y (color-difference signals) instead of RGB.

Next, the DCT (discrete cosine transform) is performed on the thumbnail image for frequency conversion. As a result, information represented in frequency corresponding to 8×8 pixels. Next, low frequency components are selected from information corresponding to 8×8 pixels. For example, six low frequency components are selected from Y-signals. Three low frequency components are selected from each of R-Y signals and B-Y signals. As a result, 12 components are selected in total. Then, these twelve coefficients are roughly quantized, and information of 64 bits in total is extracted as a feature data. For the quantization, the quantized characteristic and the number of quantization levels are changed for each of the coefficients. In this way, information represented by low frequency components included in a CM image can be obtained.

Here, video signals include 30 frames for one second. Therefore, a feature data is created for each frame according to this embodiment. However, a feature data does not have to be created for each of all frames. For example, a feature data may be added once for every two seconds. This is because an amount to be calculated increases when a feature data is calculated for each of all frames and because the reduced number of CM's can be registered in the DB 3 when the feature data for all frames are stored. Therefore, the frame interval for creating a feature data is determined in accordance with the system for broadcast checking.

Referencing back to Fig. 1, the CM checking portion 4 has a receiving facility 41 for receiving broadcasting, a feature data calculating portion 42, and a checking portion 43. The feature data calculating portion 42 calculates a feature data 44 from broadcasting signals received by the receiving facility 41. The checking portion 43 calculates feature data of a CM registered in the DB 3. Then, the checking portion 43 checks two feature data and outputs the checking result 45 to the recording portion 5. The checking result 45 may be directly sent to the client 1 by e-mail, for example.

Here, in order to check contents for broadcast checking, pictures are checked basically. In other words, as described above, CM versions of a certain kind of drink or soft drink may have the totally same voice and only different images. Therefore, broadcast checking relying on voice checking cannot detect the difference in CM versions. Therefore, broadcast checking by picture checking is desirable instead of by voice checking. Recently, the processing ability of a central processing unit (CPU) has been enhanced dramatically. Thus, an environment is provided in which picture checking having a large calculation amount can be performed sufficiently.

The detection precision can be increased when voice checking is used additionally. Therefore, both picture checking and voice checking are desirably used by using a conventionally known voice recognition technology. For example, the beginning of a CM can be detected by performing voice checking. Therefore, the CM beginning time obtained by picture checking and the CM beginning time obtained by voice checking may be checked against each other. If both of them agree, the CM obtained by picture checking can be really proved as the CM. On the other hand, disagreement of both of them indicates the possibility of CM misdetection by picture checking.

The checking portion 43 can check video signals in real time by using the method disclosed in the related technology. The recording portion 5 summarizes the checking result 45 and then submits it to the client 1 as a report 51. The checking portion 43 may send the checking result 45 to the client 1 immediately by mail or e-mail. Here, the report 51 includes a contents registration number, televised channel, televised date, televised time and televised condition. The broadcast checker 6 receives a broadcast checking charge 11 from the client 1 in compensation for the checking result 45 or the report 51.

Here, the televised condition is a broadcasted condition including whether any frame misses or not and/or whether voice is broken or not. The purpose of broadcast checking is to check whether or not a contracted number of CM's is broadcasted during a predetermined time period. Therefore, the client 1 is interested in whether or not the CM is really and properly broadcasted. Here, when a broadcast station broadcasts a registered CM, the beginning one or two frames of the registered CM may be missed due to the timing switching from another CM. However, this degree of frame missing is generally accepted.

However, when three or more frames are missed, a penalty is customarily paid from the broadcast station 2 to the client 1. Therefore, when this kind of frame missing is detected, the fact is reported as a televised condition. As described above, feature data do not have to be created for all frames. However, in order to detect about one or two frames, feature data are desirably created for all frames. Furthermore, an accident that televised voice is broken may sometimes occur. Therefore, by additionally using voice checking using the above-described voice recognition technology, whether or not voice is broken can be reported.

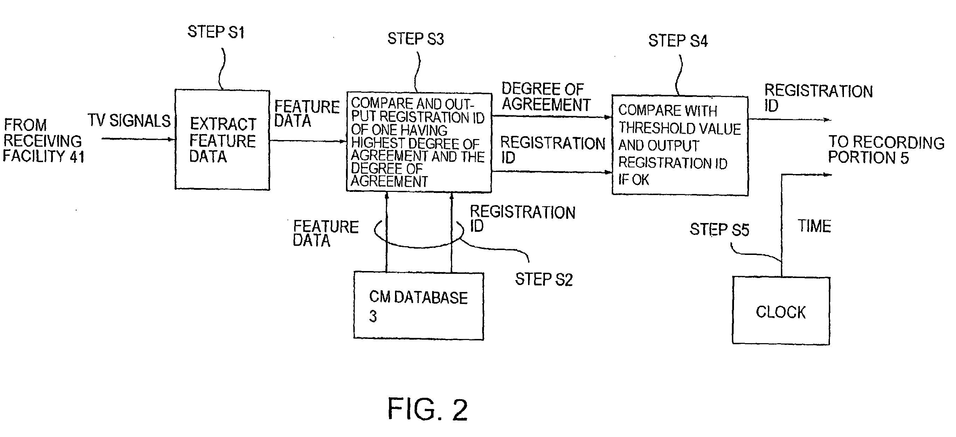

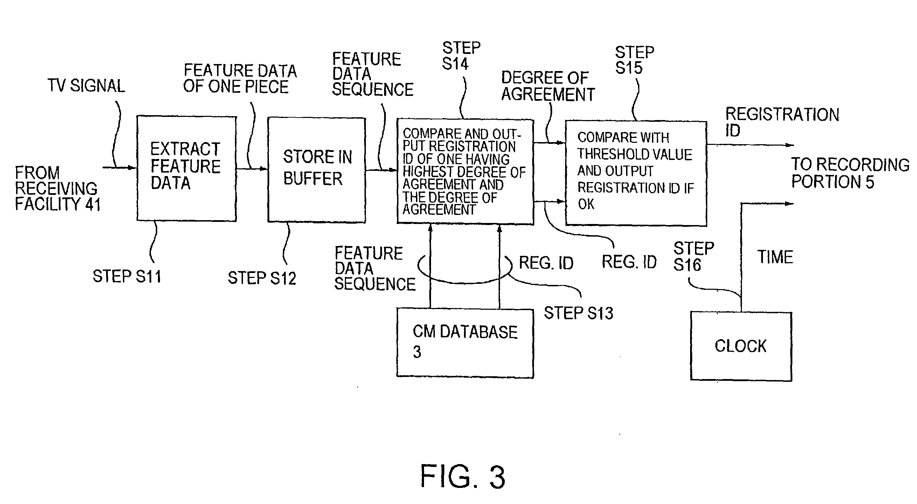

Now, steps of processing for checking video signals performed by the CM checking portion 4 will be described in detail. Fig. 2 is a flowchart for a case where the CM checking portion 4 extracts and performs picture-checking on one image. Fig. 3 is a flowchart for a case where the CM checking portion 4 extracts and performs picture-checking on an image sequence. In other words, Fig. 2 shows a case where one frame still image is detected and is checked. Fig. 3 shows a case where a moving image is detected and is checked. However, the both cases are the same in that television signals are received through a tuner. Then, a feature data is extracted from the television signals and is checked against feature data in the DB 3. One having a higher degree of agreement is selected as a candidate. If the degree of agreement between them is higher than a threshold value, it is determined as the CM.

First of all, with reference to Fig. 2, the receiving facility 41 receives television signals. Then, feature data of each of frames are extracted from the received television signals (a step S1). Next, feature datatored in the DB 3 are extracted from the DB 3 along with the registration ID's (a step S2) and are checked against the feature data extracted at the step S1 each by each. The degree of agreement (the degree of similarity of images) is calculated for each checking. The feature data within the DB 3 is selected which resembles the feature data of the input TV signals. Then, the registration ID and the degree of agreement are output (a step S3). In checking, the degree of agreement may be average values of distances between feature data, for example.

Next, the obtained degree of agreement is compared with a predetermined threshold value. If the degree of similarity is low, disagreement is determined. On the other hand, when the degree of similarity between them is beyond the threshold value, the CM is regarded as being detected. Then, the registration ID is output (a step S4). The output registration ID is sent to and is written in the recording portion 5. Here, a time when the CM is detected is required. Therefore, time information is extracted from a clock provided within the CM checking portion 4. Then, the registration ID is added to the time information S5, and the time information S5 with the registration ID are sent to the recording portion 5 (a step S5). However, the time information may be added in any step shown in Fig. 2. Alternatively, the recording portion 5 may add the time information S5 to the registration ID.

Next, Fig. 3 will be described. The steps of image sequence detection are substantially the same as the case where one frame still image is detected. Fig. 3 is different from Fig. 2 in that a feature data of each frame is extracted (a step S11). Then, feature data of one frame are accumulated in a buffer (step S12), and a feature data sequence including feature data of multiple frames is output from the buffer. Steps S13 to S16 are completely the same as the steps S2 to S5 shown in Fig. 2. Therefore, the description will be omitted here.

In this way, in order to detect an image sequence, a feature data sequence is a group of feature data of past several tens or hundreds of frames in all times. This feature data is checked as a unit. In this case, those registered in the DB 3 are also in a feature data sequence apparently. As described above, a feature data sequence does not have to be created from feature data of all frames. A feature data sequence may be created from feature data calculated by every several frames.

The report 51 summarizing the checking results 45 includes an ID given to each CM, a title of the CM, and detected beginning and ending times of the CM. The ending time is not always required. If the ID and beginning time are given, the CM can be identified. Various methods can be provided for summarizing processing in which the recording portion 5 creates the report 51. For example, the report 51 may be sent to the client 1 by e-mail, for example, every time a CM is detected. Alternatively, results for one day may be summarized in the middle of the night everyday. Furthermore, reports may be summarized every week or every month. The recording portion 5 may create the report 51 by searching CM checking results desired by a client from recorded checking results.

Here, a CM varies in length such as 5, 15 and 30 seconds. However, an entire CM must be checked in order to determine whether the CM is registered or not. For example, when the length of a given CM is 30 seconds, the CM can be sufficiently determined as the registered CM based on the first 10 seconds. For example, when only two frames for one second are used for the determination, 20 frames are used for the determination in the first 10 seconds.

Therefore, even when a feature data of one frame of twenty frames agrees accidentally but feature data of the other frames do not agree, the determination as the registered CM is not detected improperly. A detection rate of 99% or above is obtained only by the determination based on the first 10 seconds in effect by using a practicable system made by the present inventor. In cases of CM's other than those of 30 seconds long, the determination time may be increased or decreased freely in accordance with the length of the CM.

Some CM's have different versions only in the CM last part. For example, a CM having the same contents is broadcasted on weekdays while the CM having a different last part is often broadcasted in accordance with the broadcasted area on weekends, such as "Visit our Kanagawa branch nearest to you". In this case, the entire CM is preferably determined. Therefore, in order to detect a CM, the length to be detected is registered with the DB 3 for each CM. Then, the length of determination time is desirably changed in accordance with the CM to be detected.

In this embodiment, the threshold value is set such that a CM can be detected rather excessively. Thus, a case can be avoided where an actually broadcasted CM cannot be detected. Images of an excessively improperly detected CM may be recorded in a hard disk and/or a videotape recorder (VTR) separately as described later. Thus, the verification can be performed by identifying feature data of all frames of a recorded CM, by checking all of image data of each frame instead of the determination based on feature data, or by checking the recorded CM with human eyes.

In this embodiment, in order to check CM broadcasting easily by using a personal computer, for example, feature data of the contents are checked. However, in the near future, Broadcasting by Satellite (BS) digital broadcasting starts. Terrestrial waves will be also shifted to digital broadcasting from the year of 2003. Accordingly, the contents themselves will be digitized. Therefore, using not whole but parts of video signals will be highly possible to check for broadcast checking.

When all pixels included in contents are checked, the computing amount is increased. Therefore, the real-time broadcasting may need to use a main frame or a super computer. However, in view of the recent enhancement in abilities of microprocessors and the like, the real-time broadcasting will be performed by a personal computer. The DB 3 needs to have a large capacity when CM images are registered with the DB 3 as they are. However, registering a limited number of CM's with the DB 3 can overcome the problem if it is possible.

When whole or parts of contents are used for checking as they are, the contents are registered with the DB 3 as they are instead of feature data of the contents. Furthermore, the CM checking portion 4 matches the image data itself of the contents. The CM images registered with the DB 3 are checked against pictures extracted from broadcast waves of each frame. Thus, the degree of agreement between them is computed. Here, as an image detecting method, a conventional similar image detecting technology may be used such as color histogram method and dominant color method. The former method uses a proportion of color components. A color space is divided, and a proportion of pixel numbers of respective levels is determined for searching. On the other hand, the latter method is a simplified version of the former method. Searching is performed by using spatial arrangements of colors.

In Fig. 1, a pair of the receiving facility 21 and the receiving facility 41 is only provided. However, many channels are broadcasted simultaneously in fact. In order to check these many channels simultaneously, the number of provided checking bases 7 shown in Fig. 1 needs to be equal to the number of channels. Alternatively, the CM registering portion 2, CM checking portion 4 and recording portion 5 may be provided for each channel, and the DB 3 may be shared. Alternatively, the CM registering portion 2 and CM checking portion 4 are provided for each channel, and the DB 3 and recording portion 5 may be shared. When broadcast checking is performed on multi-channels, information on channels (such as one channel, three channels, and four channels) from which a given CM is detected may be added to the report 51.

In Fig. 1, the broadcast checking charge 11 may be apparently paid by a human being. However, the payment may be performed automatically by using a technology such as e-mail, electronic money and electronic commerce additionally.

As described above, a feature data is extracted from contents for checking according to this embodiment. Therefore, broadcast checking may be implemented by using received contents only. In other words, in this embodiment, additional information such as identification information advantageously does not have to be embedded in contents unlike the conventional technology. When an identification signal is embedded in contents like the conventional technology, those who know the identification signal can only check broadcasting. Furthermore, a CM having been broadcasted once is automatically registered and will be checked from the next time. Therefore, when any CM having been broadcasted once needs to be searched, the broadcast checking can be performed easily.

### [Second Embodiment]

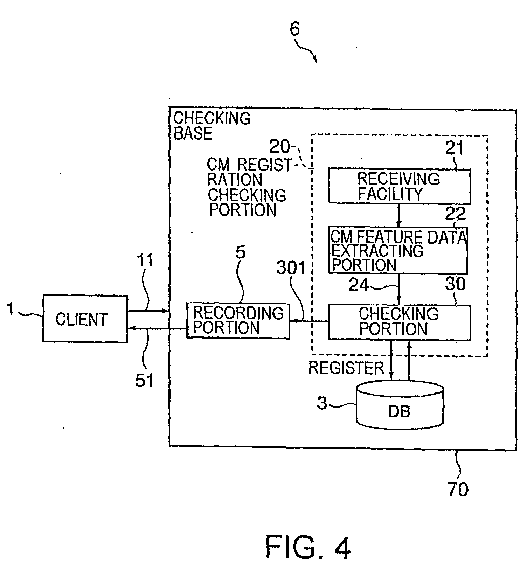

Fig. 4 is a block diagram showing a construction of a broadcast checking system according to a second embodiment of the present invention. The identical reference numerals are given to components identical to those in Fig. 1.

In this embodiment, a CM registration checking portion 20 is provided which is different from the CM registration portion 2 in Fig. 1 in function. Furthermore, the CM checking portion 4 in Fig. 1 is not provided in this embodiment. Due to these differences in construction, a checking base 70 is shown in Fig. 4 instead of the checking base 7 shown in Fig. 1.

The CM registration checking portion 20 includes a receiving facility 21 for receiving broadcasting, a CM feature data extracting portion 22, and a checking portion 30. The receiving facility 21 for receiving broadcasting includes an antenna and a tuner. In this CM registration checking portion 20, the CM feature data extracting portion 22 extracts a feature data 24 of a section corresponding to a given CM from broadcasting signals received by the receiving facility 21. The checking portion 30 checks the obtained feature data 24 against the feature data of the CM registered with the DB 3. Then, the checking portion 30 outputs a checking result 301 to the recording portion 5. As a result of the checking, the checking portion 30 registers the CM feature data 24, which is determined as not agreeing with any CM feature data registered in the DB 3, as a new feature data.

As described above, according to this embodiment, registration of a new CM and broadcast checking of a CM being broadcasted can be performed by one receiving facility 21 simultaneously.

### [Third Embodiment]

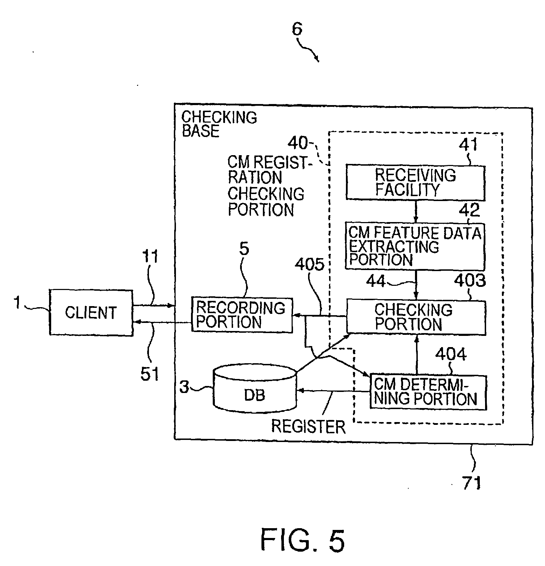

Fig. 5 is a block diagram showing a construction of a broadcast checking system according to a third embodiment of the present invention. The identical reference numerals are given to components identical to those in Fig. 1.

In this embodiment, a CM registration checking portion 40 is provided which is different from the CM checking portion 4 in Fig. 1 in function. Furthermore, the CM registration portion 2 in Fig. 1 is not provided in this embodiment. Due to these differences in construction, a checking base 71 is shown in Fig. 5 instead of the checking base 7 shown in Fig. 1.

The CM registration checking portion 40 includes a receiving facility 41 for receiving broadcasting, a feature data calculating portion 42, a checking portion 403 and a CM determining portion 404. The feature data calculating portion 42 extracts a feature data 44 from broadcasting signals received by the receiving facility 41. The checking portion 403 calculates a feature data of a CM registered with the DB 3. The checking portion 403 checks these two feature data and outputs a checking result 405 to the recording portion 5.

The checking result 405 may be sent to the client 1 directly by e-mail, for example.

The CM determining portion 404 determines whether or not a feature data 44, which is not regarded as agreeing with any CM feature data as a result of checking by the checking portion 403, is a CM feature data. If the feature data 44 is regarded as the CM feature data, the feature data 44 is registered with the DB 3 as a new CM feature data. The method of CM identification may be a conventionally known method of determining the beginning or ending of a CM based on agreement or similarity between timing for feature data extraction and timing muting received voice of television broadcasting.

Furthermore, the CM determining portion 404 can perform CM determination with reference to the checking result 405. When an existing CM is detected from the checking result 405, the CM determination portion 404 may perform CM determination on before and/or after a detected CM time position. This is because a CM highly possibly exists at certain intervals before and/or after the detected CM time. When a time position of the feature data 44 overlaps with a detected CM partially, the CM determining portion 404 can determine that no possibility of a CM exists based on the time position of the detected CM.

As described above, according to this embodiment, registration of a new CM by one receiving facility 41 and broadcast checking of a CM being broadcasted can be performed simultaneously. Furthermore, the precision of extracting a new CM can be improved by using the checking result 405.

### [Fourth Embodiment]

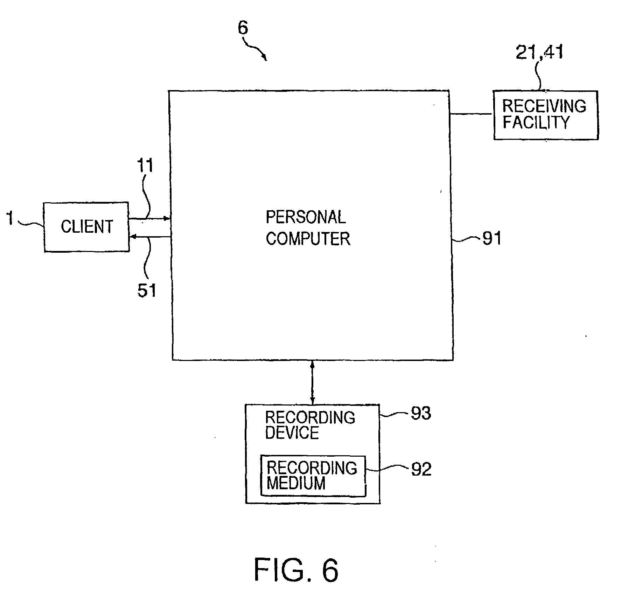

In the above-described embodiments, the apparatus is specially designed as a checking base of the broadcast checker 6. However, the present invention can be implemented by a general personal computer. Fig. 6 is a block diagram showing a construction of the broadcast checking system of this embodiment. Fig. 6 shows an example where this embodiment is applied to the first embodiment. The identical reference numerals are given to those identical to the components shown in Fig. 1. This embodiment may be applied to each of the embodiments other than the first embodiment.

In this embodiment, a program (called "broadcast checking program" hereinafter) for implementing processing by the broadcast checker 6 and data are recorded in a recording medium. Then, the broadcast checking program may be loaded from the recording medium to a personal computer for the execution. Thus, operations of hardware components included in the personal computer are controlled to perform specific processing instructed by the broadcast checking program. Therefore, the apparatus of the broadcast checker 6 according to this embodiment includes receiving facilities 21 and 41 each including an antenna and a tuner, a personal computer 91 equivalent to components other than the receiving facilities 21 and 41 within the checking base 7 shown in Fig. 1 and a recording device 93 including a computer-readable recording medium 92.

The personal computer 91 includes functions corresponding to the components (excluding the receiving facilities 21 and 41) within the checking base 7. For example, the DB 3 may be implemented as a file on a hard disk within the personal computer 91. Furthermore, the CM registering portion 2, the CM checking portion 4 and the recording portion may be implemented by executing, on the personal computer 91, the broadcast checking program stored in the recording medium 92. The processing of this broadcast checking program is completely the same as the described ones of the first embodiment.

Peripheral devices including an input device and display device, not shown in particular, are connected to the personal computer 91. The input device includes a keyboard and/or a mouse. The display device may be a cathode ray tube (CRT) or a liquid crystal display device. Here, the broadcast checking program is recorded in a computer-readable recording medium. Then, the broadcast checking program recorded in this recording medium may be read into and be executed by a computer system for broadcast checking. Fig. 6 illustrates this case. The "computer system" herein includes an operating system (OS) and hardware such as peripheral devices.

The computer-readable recording medium may be a floppy disk, a hard disk, an magneto-optical disk, a nonvolatile memory such as a flash memory, a read-only recording medium such as a compact disc read-only memory (CDROM), a volatile memory such as a random access memory (RAM), or a combination thereof. The personal computer 91 includes a CPU and a main memory. The broadcast checking program for implementing the same functions as those performed in the checking base 7 shown in Fig. 1 is loaded onto the main memory and then is executed thereon.

The computer-readable recording medium includes one holding a program for a certain period of time like a memory within a computer system to be used as a server or a client in a case where the broadcast checking program is sent over a network such as the Internet or through a communication line such as a telephone line. The broadcast checking program may be transmitted from a computer system storing the broadcast checking program in the memory device to the other computer system through a transmission medium or by transmission waves in the transmission medium.

Here, the "transmission medium" for transmitting the program refers to a medium having a function for transmitting information like a network such as the Internet or a communication like such as a telephone line. The broadcast checking program may implement a part of the above-described functions. Alternatively, the broadcast checking program may implement the above-described functions in combination with a program recorded in the computer system in advance (that is, a differential program).

The operation of this embodiment is basically the same as that of the first embodiment except that the broadcast checking program is read from the recording medium 92 onto the personal computer 91 for broadcast checking. The present inventor et al found that a given CM could be detected by one personal computer in real-time even when about 10 thousand CM's were registered with the DB 3.

The above-described embodiments are examples for explaining the present invention. The present invention is not limited to the embodiments. Various changes are possible without departing from the principle of the present invention. For example, in each of the above-described embodiments, broadcasting is performed in real-time by using received broadcasting waves in accordance with the actual operation form. However, Cm images may be recorded in a videotape, and then the videotape may be played for broadcast checking.

### Industrial Applicability

As described above, in the invention according to Claims 1 to 12 and Claims 16 to 19, contents are automatically extracted from broadcasting waves. The feature data is calculated from the contents. The calculated feature data is checked against a feature data of the contents detected from broadcasting waves from a broadcast station. Thus, implementation of contents broadcasting including pictures can be checked. The size of a database, for example, can be reduced for registering feature data. The time required for checking can be reduced more largely than checking of contents data itself. Furthermore, contents having been broadcasted once are automatically registered and will be checked from the next time. Therefore, even when given contents having been broadcasted once are requested to search including contents of the other companies, the broadcast checking can be performed easily.

In the invention according to Claims 13 to 15, contents are automatically extracted from broadcasting waves. The feature data is calculated from the contents. The calculated feature data is checked against a feature data of the contents detected from broadcasting waves from a broadcast station. The result is reported to a client. Therefore, the client can recognize a broadcasting condition of contents based on the reported checking result.

In the invention according to Claim 3, registration of new contents by using one receiving facility and broadcast checking of contents being broadcasted can be performed simultaneously. Therefore, broadcast checking can be performed by using a computer having a lower processing ability.

In the invention according to Claim 9, feature data of all received frames are calculated. Therefore, frame missing can be detected in contents broadcasting or the like. Then, the frame missing can be reported to a client as a broadcasting condition.

In the invention according to Claim 10, feature data of only parts of received frames are calculated. Therefore, the time required for calculating feature data can be reduced. As a result, broadcast checking can be performed even by using a computer having a lower processing ability, for example.

In the invention according to Claim 12, contents includes voice in addition to pictures. Voice data of contents are accumulated. Voice data is detected from broadcasting waves and are checked against the accumulated voice data. In this way, by using voice checking additionally, the precision of detecting contents can be more improved than checking pictures only. For example, when checking results of voice checking and video checking are compared, and when they agree, the contents obtained by picture checking can be proved as contents to be checked for broadcasting. On the other hand, when they do not agree, the contents obtained by picture checking can be suspected of being improperly detected.

## Claims

1. A broadcast checking apparatus for checking broadcasting of contents including pictures, the apparatus comprising:
storing means for storing feature data of the contents;
contents feature data extracting means for extracting a feature data of the contents from broadcasting signals;
contents registering means for registering the feature data of the contents extracted by the contents feature data extracting means with the storing means;
first feature data calculating means for calculating a feature data from broadcasting signals;
checking means for checking the feature data calculated by the first feature data calculating means against the feature data on the storing means; and
recording means for recording a checking result obtained by the checking.

2. A broadcast checking apparatus for checking broadcasting of contents including pictures, the apparatus comprising:
storing means for storing feature data of the contents;
contents feature data extracting means for extracting a feature data of the contents from broadcasting signals;
registration checking means for checking the feature data of the contents extracted by the contents feature data extracting means against the feature data on the storing means;
contents registering means for registering the feature data of the contents determined as not being included in the storing means as a result of the checking by the registration checking means with the storing means;
first feature data calculating means for calculating a feature data from broadcasting signals;
checking means for checking the feature data calculated by the first feature data calculating means against the feature data on the storing means; and
recording means for recording a checking result obtained by the checking.

3. A broadcast checking apparatus for checking broadcasting of contents including pictures, the apparatus comprising:
storing means for storing feature data of the contents;
contents feature data extracting means for extracting a feature data of the contents from broadcasting signals;
checking means for checking the feature data of the contents extracted by the contents feature data extracting means against the feature data on the storing means;
contents registering means for registering the feature data of the contents determined as not being included in the storing means as a result of the checking by the checking means with the storing means; and
recording means for recording a checking result obtained by the checking.

4. A broadcast checking apparatus according to Claim 1,
wherein the contents feature data extracting means comprises:
contents extracting means for extracting the contents from broadcasting signals; and
second feature data calculating means for calculating the feature data of the contents extracted by the contents extracting means.

5. A broadcast checking apparatus according to Claim 1,
wherein the contents feature data extracting means comprises:
second feature data calculating means for calculating a feature data from broadcasting signals; and
contents feature data cutting-out means for estimating a contents section from a feature data calculated by the second feature data calculating means and for cutting out a feature data corresponding to the contents section.

6. A broadcast checking apparatus for checking broadcasting of contents including pictures, the apparatus comprising:
storing means for storing feature data of the contents;
first feature data calculating means for calculating a feature data from broadcasting signals;
checking means for checking the feature data calculated by the first feature data calculating means against the feature data on the storing means;
recording means for recording a checking result obtained by the checking means;
contents determining means for determining whether or not the feature data determined as not being included in the storing means as a result of the checking by the checking means is the feature data of the contents; and
contents registering means for registering the feature data determined as the feature data of the contents by the contents determining means.

7. A broadcast checking means according to Claim 6 wherein the contents determining means performs the determination based on a checking result by the checking means.

8. A broadcast checking apparatus according to Claim 1,
wherein the feature data calculating means creates the feature data by creating a resized image of all or parts of frames included in picture data of contents and by performing frequency conversion and quantization on the resized image.

9. A broadcast checking apparatus according to Claim 1,
wherein the feature data calculating means calculates the feature data of all received frames.

10. A broadcast checking apparatus according to Claim 1,
wherein the feature data calculating means calculates the feature data of parts of received frames.

11. A broadcast checking apparatus according to Claim 1, further comprising:
time information creating means for creating time information when a checking result of the checking means agrees with a feature data on the storing means;
time information adding means for adding the time information to contents of the feature data agreeing with the feature data on the storing means; and
recording means for recording contents including the time information.

12. A broadcast checking means according to Claim 1, wherein the feature data calculating means detects voice data included in the contents,
wherein the storing means stores voice data included in the contents, and
wherein the checking means checks the detected voice data against the stored voice data and outputs a checking result.

13. A broadcast checking system for checking broadcasting of contents that a client desires broadcast checking, the system comprising:
a broadcast checking apparatus according to Claim 1; and
reporting means for reporting a checking result recorded by the broadcast checking apparatus to the client.

14. A broadcast checking system according to Claim 13,
wherein the reporting means sends data indicating the checking result to the client.

15. A broadcast checking system according to Claim 13,
wherein the reporting means searches and reports a result of checking contents desired by the client from checking results recorded by the broadcast checking apparatus.

16. A broadcast checking method for checking broadcasting of contents including pictures, the broadcast checking method comprising the steps of:
extracting a feature data of the contents from broadcasting signals;
storing the extracted contents feature data;
calculating a feature data from broadcasting signals;
checking the calculated feature data against the stored feature data; and
recording a checking result obtained by the checking.

17. A broadcast checking method for checking broadcasting of contents including pictures, the broadcast checking method comprising the steps of:
storing a feature data of the content;
extracting a feature data of the contents from broadcasting signals;
checking the extracted feature data against the stored feature data;
newly storing the extracted feature data determined as not being included in the stored feature data as a result of the checking;
calculating a feature data from broadcasting signals;
checking the calculated feature data against the stored feature data; and
recording a checking result obtained by the checking.

18. A broadcast checking method for checking broadcasting of contents including pictures, the broadcast checking method comprising the steps of:
storing a feature data of the content;
extracting a feature data of the contents from broadcasting signals;
checking the extracted contents feature data against the stored feature data;
newly storing the extracted feature data determined as not being included in the stored feature data as a result of the checking; and
recording a checking result obtained by the checking.

19. A broadcast checking method for checking broadcasting of contents including pictures, the broadcast checking method comprising the steps of:
storing a feature data of the content;
calculating a feature data from broadcasting signals;
checking the calculated feature data against the stored feature data;
recording a checking result obtained by the checking;
determining whether or not the calculated feature data determined as not being included in the stored feature data as a result of the checking is the feature data of the contents; and
newly storing the calculated feature data determined as not being included in the feature data of the contents as a result of the determining.

20. A computer-readable recording medium storing a broadcast checking program for checking broadcasting of contents including pictures, the broadcast checking program causing a computer to perform the steps of:
extracting a feature data of the contents from broadcasting signals;
storing the extracted contents feature data;
calculating a feature data from broadcasting signals;
checking the calculated feature data against the stored feature data; and
recording a checking result obtained by the checking.
